(19) **Europäisches Patentamt**

**European Patent Office**

**Office européen des brevets**

(11) **EP 1 024 112 A1**

(12) **EUROPÄISCHE PATENTANMELDUNG**

(43) Veröffentlichungstag:
**02.08.2000  Patentblatt 2000/31**

(51) Int. Cl.[7]: **C01B 21/26**

(21) Anmeldenummer: **00101294.7**

(22) Anmeldetag: **27.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.01.1999 DE 19903616**

(71) Anmelder:
**BASF AKTIENGESELLSCHAFT**
**67056 Ludwigshafen (DE)**

(72) Erfinder:
• **Schicketanz, Walter, Dr.**
**67227 Frankenthal (DE)**

• **Schumacher, Volker, Dr.**
**67227 Frankenthal (DE)**
• **Siebert, Gerhard, Dr.**
**67227 Frankenthal (DE)**

(74) Vertreter:
**Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(54) **Verfahren zur Herstellung von Stickoxiden mit niedrigem Oxidationsgrad**

(57)  In einem Verfahren zur Herstellung von Stickoxiden mit niedrigem Oxidationsgrad durch katalytische Oxidation von Ammoniak, wird Ammoniak im Gemisch mit Luft und Wasserdampf an einem Oxidationskatalysator oxidiert.

**EP 1 024 112 A1**

**Beschreibung**

Technische Stickoxide ($NO_X$) bestehen vorwiegend oder vollständig aus Stickstoffmonoxid und Stickstoffdioxid. Sie werden technisch als Ausgangsstoff zur Herstellung von Salpetersäure, Nitraten und Nitriten sowie als Einsatzstoff für chemische Reaktionen, zum Beispiel Nitrosierungen oder Nitrierungen verwendet.

Stickoxide werden technisch durch Oxidation von Ammoniak mit Luft an Edelmetallkatalysatoren (zum Beispiel Pt/Rh oder Pt/Rh/Pd) oder oxidischen Katalysatoren (zum Beispiel Eisenoxid, Chromoxid) hergestellt. Zu beachten ist dabei, daß Ammoniak mit Luft ein explosibles Gemisch bilden kann. So liegt die untere Explosionsgrenze von $NH_3$ in Luft bei ca. 15 Vol-%, abhängig von Druck und Temperatur. Um eine Explosion auszuschließen, muß daher im eingesetzten Gasgemisch ein ausreichender Sicherheitsabstand zu der unteren Explosionsgrenze eingehalten werden. Daher liegt in technischen Reaktoren die Ammoniakkonzentration im allgemeinen unter 10 Vol-% Ammoniak, seltener im Bereich von 10 bis 12 Vol-%, nie über 12,5 Vol-%.

Bei der katalytischen Oxidation von Ammoniak bildet sich bei Temperaturen von ca. 750 bis 950°C zunächst überwiegend Stickstoffmonoxid, das beim Abkühlen mit vorhandenem Sauerstoff zu Stickstoffdioxid oxidiert wird. Das gebildete Verhältnis zwischen NO und $NO_2$ wird als Oxidationsgrad a bezeichnet. Der Oxidationsgrad ist definiert als Volumenanteil von $NO_2$ im Verhältnis zu dem Gesamtvolumen NO + $NO_2$

$$\propto = NO_2/(NO+NO_2).$$

Bei einem Gemisch von zum Beispiel 10 Vol-% $NH_3$ in Luft ist der nach der Oxidationsreaktion verbleibende Sauerstoff von ca. 6,4 Vol-% ausreichend, um das gesamte gebildete Stickstoffmonoxid zu Stickstoffdioxid zu oxidieren. Diese Reaktion verläuft selbständig ohne Katalysator bis zum vollständigen Umsatz, dadurch wird $NO_x$ mit einem Oxidationsgrad von 100 % erhalten.

Bei zahlreichen Reaktionen wie der Nitrosierung organischer Verbindungen oder der Herstellung von Nitritlösung ist es wünschenswert, Stickoxide mit einem niedrigen Oxidationsgrad einzusetzen, um die Bildung von Nebenprodukten, zum Beispiel Nitroverbindungen oder Nitraten, gering zu halten. Erwünscht ist insbesondere häufig ein Oxidationsgrad $\propto < 50$ %.

Dazu sind folgende Vorgehensweisen bekannt.

- Erhöhung der $NH_3$-Konzentration im $NH_3$-Luftgemisch
  Bei einer höheren Ammoniakkonzentration verringert sich der Sauerstoffüberschuß; dies ergibt einen geringeren Gehalt an verbleibendem Sauerstoff und damit einen niedrigeren Oxidationsgrad. Es ergibt sich zum Beispiel bei 11 Vol-% Ammoniak in Luft ein Oxidationsgrad von 90 % und bei 12 Vol-% $NH_3$ in Luft ein Oxidationsgrad von ca. 60 %. Höhere Ammoniakkonzentrationen werden aus den obengenannten Gründen im allgemeinen nicht dauerhaft eingesetzt.

- Verringerung der Verweilzeit
  Bei einer Verkürzung der Verweilzeit des Gasgemisches nach dem Katalysator wird das NO nicht vollständig zu $NO_2$ umgesetzt; dadurch sind beliebige Oxidationsgrade erhältlich. Sie sind aber stark abhängig von den Bedingungen, zum Beispiel Durchsatz, Temperatur, Druck, und daher schwer konstant zu halten.

- Auswaschen von $NO_2$ im Wasser
  Dabei bildet sich im sauren Bereich Salpetersäure unter gleichzeitiger NO-Bildung nach der Gleichung

$$3NO_2+H_2O \rightarrow 2HNO_3+NO$$

  Vorteil: Oxidationsgrad wird gesenkt
  Nachteil: Zwangsanfall von zum Teil erheblichen Mengen an Salpetersäure mit niedriger Konzentration (zum Erreichen einer höheren Konzentration wäre ein höherer Oxidationsgrad erforderlich).

- Produktion von reinem NO und nachträgliche Oxidation auf gewünschten Oxidationsgrad
  Die Produktion von reinem NO erfolgt durch Verbrennung eines Gemisches von Ammoniak, Sauerstoff und Wasserdampf, wobei die Sauerstoff-/Dampfkonzentration in erster Näherung dem Sauerstoff-/Stickstoffverhältnis in Luft entspricht. Dadurch verläuft die Oxidation am Edelmetallkontakt sehr ähnlich wie bei der Oxidation von Ammoniak in Luft. Der zugegebene Wasserdampf kann nach erfolgter Oxidation durch einfache Auskondensation entfernt werden, vergleiche EP-A-0 194 715.

  Vorteil: Reines NO-Gas mit einer Konzentration von über 90 % und einem Oxidationsgrad nahe Null wird erhalten.
  Nachteil: Einsatz von teuerem Sauerstoffgas, zusätzlicher Einsatz von Wasserdampf, aufwendige Regelung des Gemisches aus Sicherheitsgründen.

Aufgabe der Erfindung ist die Bereitstellung eines Verfahrens zur Herstellung von Stickoxiden mit niedrigem Oxidationsgehalt durch katalytische Oxidation von Ammoniak, das die Nachteile der bekannten Verfahren vermeidet und unaufwendig und kostengünstig die Einstellung des Oxidationsgrades erlaubt.

Die Aufgabe wird erfindungsgemäß gelöst durch ein Verfahren zur Herstellung von Stickoxiden mit niedrigem Oxidationsgrad durch katalytische Oxidation von Ammoniak, bei dem Ammoniak im Gemisch mit Luft und Wasserdampf an einem Oxidationskatalysator oxidiert wird.

Dabei beträgt der Anteil an Wasserdampf im eingesetzten Gasgemisch vorzugsweise 1 bis 50 Vol-%, besonders bevorzugt 2 bis 30 Vol-%, insbesondere 5 bis 20 Vol-%.

Der Anteil an Ammoniak im eingesetzten Gasgemisch beträgt vorzugsweise 7,5 bis 12,5 Vol-%, besonders bevorzugt 10 bis 12 Vol-%. Der verbleibende Teil des Gasgemisches ist Luft.

Der Oxidationsgrad, bestimmt als Volumenanteil $NO_2$ am Gesamtvolumen von $NO$ und $NO_2$, beträgt vorzugsweise 33 bis 55 %, besonders bevorzugt 40 bis 50 %, insbesondere weniger als 50 %.

Im erfindungsgemäßen Verfahren wird das Gasgemisch vorzugsweise kontinuierlich über einen Oxidationskatalysator geführt. Als Oxidationskatalysator können alle Katalysatoren eingesetzt werden, die die Oxidation von Ammoniak zu Stickoxiden beschleunigen können. Vorzugsweise werden Edelmetalle enthaltende Katalysatoren oder Metalloxide enthaltende Katalysatoren eingesetzt. Beispiele derartiger Katalysatoren sind Pt/Rh- oder Pt/Rh/Pd-Katalysatoren oder Katalysatoren auf Basis von Eisenoxid oder Kobaltoxid, wie auch Manganoxid, Wismutoxid und/oder Kobaltoxid, aber auch Kupferoxid, Chromoxid, Nickeloxid, vergleiche JP-A-05 9592, US 5,256,387, BE 781,836 und BE 773,432. Die Umsetzung wird vorzugsweise bei einem Druck im Bereich von 1 bis 15 bar, besonders bevorzugt 1 bis 10 bar, insbesondere 2 bis 5 bar durchgeführt. Die Temperatur bei der Umsetzung liegt vorzugsweise im Bereich von 600 bis 950°C, besonders bevorzugt von 750 bis 900°C, insbesondere von 800 bis 900°C.

Das Verfahren kann dabei beispielsweise nach der in Ullmanns Enzyklopädie der technischen Chemie, Band 20, S. 307 ff. (1981) beschriebenen Vorgehensweise durchgeführt werden.

Nach erfolgter Umsetzung wird der Wasserdampf vorzugsweise durch Kondensation aus dem Produktgemisch entfernt, so daß das Produkt einfach weiterverarbeitet oder aufgearbeitet werden kann.

Das erfindungsgemäße Verfahren bietet gegenüber bekannten Verfahren die Vorteile, daß der Oxidationsgrad im Gasgemisch frei eingestellt werden kann, kein kostspieliger Sauerstoff als Gas eingesetzt werden muß, ein nur geringer Zusatz von Wasserdampf notwendig ist und im Produktgemisch keine zusätzliche Salpetersäure anfällt.

Die Erfindung wird nachstehend anhand von Beispielen näher erläutert.

**Beispiel 1**

In einer Laborapparatur wurde Ammoniak in einem Ammoniak-Luftgemisch mit einer Konzentration von 10 bzw. 11 Vol.-% Ammoniak an einem Pt/Rh-Netz mit einer Belastung von 15 g/h Ammoniak pro $cm^3$ Netzfläche bei einer Temperatur von 913°C zu Stickoxid umgesetzt. In verschiedenen Versuchen wurden Teile der Luft durch einen entsprechenden Dampfzusatz ersetzt.

Das gasförmige Reaktionsgemisch wurde zur Abscheidung des gebildeten sowie des zugesetzten Wasserdampfes rasch abgekühlt. Das verbleibende Gasgemisch wurde nach einer Verweilzeit von ca. 2 Minuten auf die enthaltenen Stickoxide sowie deren Oxidationsgrad ($\alpha$) analysiert. Es wurden folgende Ergebnisse erhalten:

| Versuch | $NH_3$ | Dampfzusatz | $\alpha$ |
|---------|--------|-------------|----------|
| 1 A | 10 Vol-% | ohne | 100 % |
| 1 B | 10 Vol-% | 10 Vol-% | 86 % |
| 1 C | 10 Vol-% | 20 Vol-% | 44 % |
| 2 A | 11 Vol-% | ohne | 90 % |
| 2 B | 11 Vol-% | 10 Vol-% | 52 % |
| 2 C | 11 Vol-% | 15 Vol-% | 32 % |

**Beispiel 2**

Ein technischer Reaktor zur katalytischen Oxidation von Ammoniak zu Stickoxiden, der mit einem Platin/Rhodium-Netz als Katalysator und einem Wärmetauscher ausgestattet war, wurde mit einem Gemisch aus 11,8 Vol-% Ammoniak in Luft beschickt, die Belastung des Katalysators entsprach 4,6 t/Tag NO pro $m^2$ Edelmetallnetz. Die Temperatur im Reaktor betrug ca. 880°C, das Gas wurde in dem nachfolgenden Wärmetauscher auf 50°C abgekühlt. Nach Auskondensation des gebildeten Wasserdampfes lag der Anteil an $NO_2$ im gebildeten $NO_x$ bei ca. 65 %.

In einem nächsten Versuch wurden 5 % der Luftmenge durch Wasserdampf ersetzt, wobei die übrigen Reaktionsbedingungen unverändert blieben. Nach der Auskondensation des Wasserdampfes lag der Anteil an $NO_2$ im gebildeten $NO_x$ bei ca. 45 %.

**Patentansprüche**

1. Verfahren zur Herstellung von Stickoxiden mit niedrigem Oxidationsgrad durch katalytische Oxidation von Ammoniak, dadurch gekennzeichnet, daß Ammoniak im Gemisch mit Luft und Wasserdampf an einem Oxidationskatalysator oxidiert wird.

**EP 1 024 112 A1**

**2.** Verfahren nach Anspruch 1, dadurch gekennzeichnet, daß der Anteil an Wasserdampf im eingesetzten Gasgemisch 1 bis 50 Vol-% beträgt.

**3.** Verfahren nach Anspruch 1 oder 2, dadurch gekennzeichnet, daß der Anteil an Ammoniak im eingesetzten Gasgemisch 7,5 bis 12,5 Vol-% beträgt.

**4.** Verfahren nach einem der Ansprüche 1 bis 3, dadurch gekennzeichnet, daß als Oxidationskatalysator Edelmetalle enthaltende Katalysatoren oder Metalloxide enthaltende Katalysatoren eingesetzt werden.

**5.** Verfahren nach einem der Ansprüche 1 bis 4, dadurch gekennzeichnet, daß die Umsetzung bei einem Druck im Bereich von 1 bis 15 bar und einer Temperatur im Bereich von 600 bis 950°C durchgeführt wird.

**6.** Verfahren nach einem der Ansprüche 1 bis 5, dadurch gekennzeichnet, daß der Wasserdampf nach der Umsetzung durch Kondensation aus dem Produktgemisch entfernt wird.

**Europäisches Patentamt**

# EUROPÄISCHER RECHERCHENBERICHT

Nummer der Anmeldung

EP 00 10 1294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 236 819 A (INSTYTUT NAWOZOW SZTUCZNYCH) 23. Juni 1971 (1971-06-23) * das ganze Dokument * | 1-6 | C01B21/26 |
| X | DE 10 40 002 B (BASF) * das ganze Dokument * | 1-6 | |
| X | PATENT ABSTRACTS OF JAPAN vol. 1998, no. 04, 31. März 1998 (1998-03-31) & JP 09 309709 A (MITSUI PETROCHEM IND LTD), 2. Dezember 1997 (1997-12-02) * Zusammenfassung * | 1-6 | |
| X | CHEMICAL ABSTRACTS, vol. 107, no. 20, 16. November 1987 (1987-11-16) Columbus, Ohio, US; abstract no. 179382, TKACHUK, N. M. ET AL: "Characteristics of oxidation of ammonia in the presence of water vapor" XP002137414 * Zusammenfassung * & IZV. VYSSH. UCHEBN. ZAVED., KHIM. KHIM. TEKHNOL. (1987), 30(7), 116-17 , | 1-6 | RECHERCHIERTE SACHGEBIETE (Int.Cl.7) C01B |
| X | CHEMICAL ABSTRACTS, vol. 111, no. 16, 16. Oktober 1989 (1989-10-16) Columbus, Ohio, US; abstract no. 136949, KOLESNIK, V. V. ET AL: "Process control in the manufacture of dilute ntric acid" XP002137415 * Zusammenfassung * & SU 1 490 071 A (INSTITUTE OF CYBERNETICS, ACADEMY OF SCIENCES, UKRAINIAN S.S.R., USSR;) 30. Juni 1989 (1989-06-30) | 1-6 | |

-/--

| Der vorliegende Recherchenbericht wurde für alle Patentansprüche erstellt | | | |
|---|---|---|---|
| Recherchenort DEN HAAG | Abschlußdatum der Recherche 11. Mai 2000 | Prüfer Zalm, W | |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 00 10 1294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1996, no. 06, 28. Juni 1996 (1996-06-28) & JP 08 040710 A (MITSUBISHI CHEM CORP), 13. Februar 1996 (1996-02-13) * Zusammenfassung * | 1 | |
| X | DATABASE WPI Section Ch, Week 199423 Derwent Publications Ltd., London, GB; Class B06, AN 1994-186256 XP002137416 & JP 06 122507 A (MITSUI TOATSU CHEM INC), 6. Mai 1994 (1994-05-06) * Zusammenfassung * | 1 | |
| X | DATABASE WPI Section Ch, Week 199423 Derwent Publications Ltd., London, GB; Class B06, AN 1994-186254 XP002137417 & JP 06 122505 A (MITSUI TOATSU CHEM INC), 6. Mai 1994 (1994-05-06) * Zusammenfassung * | 1 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 11. Mai 2000 | Zalm, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 10 1294

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2000

| Im Recherchenbericht angeführtes Patentdokument | | Datum der Veröffentlichung | Mitglied(er) der Patentfamilie | | Datum der Veröffentlichung |
|---|---|---|---|---|---|
| GB 1236819 | A | 23-06-1971 | BE | 719738 A | 03-02-1969 |
| | | | DE | 1792337 A | 03-02-1972 |
| | | | FR | 1598164 A | 06-07-1970 |
| | | | NL | 6811901 A | 25-02-1969 |
| DE 1040002 | B | | KEINE | | |
| JP 09309709 | A | 02-12-1997 | KEINE | | |
| SU 1490071 | A | 30-06-1989 | KEINE | | |
| JP 08040710 | A | 13-02-1996 | KEINE | | |
| JP 6122507 | A | 06-05-1994 | KEINE | | |
| JP 6122505 | A | 06-05-1994 | KEINE | | |

EPO FORM P0461

Für nähere Einzelheiten zu diesem Anhang : siehe Amtsblatt des Europäischen Patentamts, Nr.12/82